(19) Europäisches Patentamt
European Patent Office
Office européen des brevets

(11) **EP 3 452 642 B1**

(12) **EUROPEAN PATENT SPECIFICATION**

(45) Date of publication and mention
of the grant of the patent:
**18.03.2020 Bulletin 2020/12**

(21) Application number: **16753727.3**

(22) Date of filing: **30.06.2016**

(51) Int Cl.:
**D01D 5/16** (2006.01)     **D01F 6/60** (2006.01)

(86) International application number:
**PCT/TR2016/050206**

(87) International publication number:
**WO 2018/004481 (04.01.2018 Gazette 2018/01)**

(54) **HIGH SHRINKAGE POLYAMIDE 46 MULTIFILAMENT YARN**

POLYAMID-46-MULTIFILAMENTGARN MIT HOHER SCHRUMPFUNG

FIL MULTIFILAMENT DE POLYAMIDE 46 À RETRAIT ÉLEVÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.03.2019 Bulletin 2019/11**

(73) Proprietor: **Kordsa Teknik Tekstil Anonim Sirketi Izmit/Kocaeli (TR)**

(72) Inventors:
• **DEMIR, Can**
**Kocaeli (TR)**
• **GUVEN, Emine**
**Kocaeli (TR)**
• **KOP, Erhan**
**Kocaeli (TR)**

(74) Representative: **Dericioglu, E. Korhan**
**Ankara Patent Bureau**
**Kavaklidere Mahallesi Bestekar Caddesi No: 10**
**06680 Cankaya, Ankara (TR)**

(56) References cited:
**EP-A2- 0 381 281      KR-B1- 100 335 511**
**US-A- 4 751 952      US-A- 4 858 666**

## Description

## Technical Field of the Invention

The present invention relates to a production method of polyamide 4.6 multifilament yarn useful for tire reinforcement applications.

## Background of the Invention

Thermoplastics such as polyamide6 and polyamide66 are widely used raw materials for production of various reinforcement materials or parts in automotive industry. Due to having a more crystalline molecular structure, polyamide46 possesses advantageous thermo-mechanical properties compared to both polyamide6 and polyamide66. As a result of having higher melting and glass transition temperatures, polyamide46 exhibits significantly higher elastic modulus with respect to polyamide66 under high temperature environments. This intrinsic advantage of polyamide46 makes it utilized in automotive industry for several under the hood applications instead of polyamide66.

Thanks to its spinnability, polyamide46 can also be converted into industrial fibers. There are examples of polyamide46 fiber usage for reinforcement of airbags, v-belts, conveyor belts or tires. In these applications, polyamide46 fibers are reported to provide significantly higher elastic modulus under elevated temperatures with respect to polyamide66, therefore inducing an advanced dimensional stability to the products they reinforce.

On the other hand, highly crystalline molecular structure of polyamide46 makes manufacturing of industrial polyamide46 fibers a challenging process. Polyamide46 has much more tendency to degrade during melt processing contrary to polyamide66. This behavior hinders providing the advantageous mechanical and thermal properties of polyamide46 in yarn form unless special measures are conveniently employed in polyamide46 yarn production process such as; sufficiently drying the polyamide46 raw material (pellets) prior to melt processing, keeping the melt phase residence time as low as possible and optimizing the yarn spinning process.

Furthermore, the relatively high price of polyamide46 limits its usage in mentioned applications. Nevertheless, polyamide46 fibers are still commercially utilized in several niche applications where the high price can be justified, such as sewing threads of airbag fabrics.

In the last decades, attempts have been made to utilize pronounced creep resistance of polyamide46 in tire reinforcement textiles (tire cord fabrics) as a potential replacement to polyamide66, which is the conventional raw material for production of tire cord fabrics used in cap ply of radial tires. Although mentioned benefits of polyamide46 usage have been observed in tire reinforcement applications, one of the major obstacles in commercialization of polyamide46 yarn usage in tires has been the intrinsically low thermal shrinkage property of polyamide46 yarns with respect to polyamide66 yarns.

The thermal shrinkage, which is the shrinkage percentage of yarn when exposed to a heated environment, is a crucial property for polyamide yarns that are intended for production of tire cord fabrics. The cord fabric, which is embedded in the cap ply of tires, exerts a force in the reverse direction of tire expansion and stabilizes the dimensions of the tire under service (rolling) conditions. This counteracting force exerted by the cord fabric is called the "shrink force" and it is directly proportional to the thermal shrinkage property of the cord fabric, thus the polyamide yarns which the cord fabric is made of. Shrink force is especially important for racing tires which endure great amount of temperature and centrifugal forces.

The "free shrinkage" value is a direct indicator of thermal shrinkage property of a polyamide yarn and it is characterized by the formula $(l_o - l_1)/l_o \times 100$ where $l_o$ is the length of yarn sample that is conditioned under 20 °C and 65% relative humidity for 4 hours under a tension of 0.05 gram/denier and $l_1$ is the length of the same sample under the same tension after being heated in an oven at 180±2 °C for 30 minutes in unstretched state followed by conditioning at 20 °C and 65% relative humidity for 4 hours.

For polyamide multifilament yarns intended for tire reinforcement applications, a shrink force value that is higher than 0.35 grams/denier (according ASTM D5591) is highly beneficial for providing effective stabilization of tire dimensions under high service temperatures (eg. higher than 100 °C) and high rotational speeds (eg. higher than 1400 revolutions per minute). A polyamide multifilament yarn having a free shrinkage lower than 6% will not provide the mentioned shrink force value. On the other hand, polyamide yarn having excessive free shrinkage (higher than 8%) is not favored since the cord fabric made from such yarn may shrink too much and deteriorate the dimensional stability of the tire.

Patents EP0381281 (A3) and KR900007087 (B1) and WO02095096 (A1) relate to polyamide46 multifilament yarn and production methods. Nevertheless, the produced polyamide46 multifilament yarn in these patents is said to have free shrinkage value less than 5%, which is insufficient to construct a cord fabric that possesses shrinkage and shrink force levels necessary to provide good stabilization performance in tires that withstand very high temperatures and rotational speeds, such as racing tires. The present invention is novel in the sense that polyamide46 multifilament yarn having a free shrinkage value greater than 6% (preferably 6.5%) is produced, which is substantially beneficial for mentioned tire reinforcement applications.

## Objects of the Invention

This invention comprises production of PA46 multifilament yarn exhibiting a free shrinkage value between 6% and 8% measured according to the explained method. Invention is beneficial for manufacturing a tire cord fabric that provides effective stabilization of tire integrity under rigorous service conditions (eg. tire temperatures higher than 100 °C and rotational speeds higher than 1400 rpm) by means of exerting high shrink force in reverse direction of tire expansion under said conditions. By this invention, one of the most important drawbacks of polyamide46 yarn usage in tire reinforcement textiles has been eliminated.

## Brief Explanation of the Figure

The figure brief explanation of which are herewith provided with is solely intended for providing a better understanding of the invention and are as such not intended the define the scope of protection or the context in which said scope is to be interpreteded in the absence of the description.

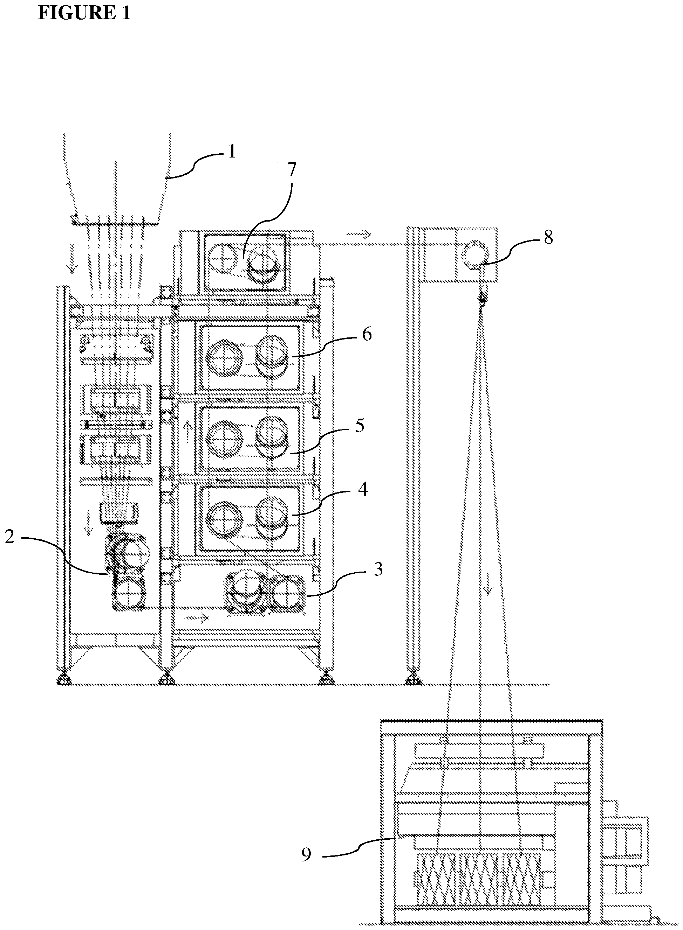

Figure 1 is a schematically view of a multifilament yarn production equipment according to the present invention.
The indicated number on Figure 1 refer to the below elements of one of the embodiment of a multifilament yarn production equipment:

1- Quenching chamber

2- Spinning roll pair 1

3- Spinning roll pair 2

4- Spinning roll pair 3

5- Spinning roll pair 4

6- Spinning roll pair 5

7- Spinning roll pair 6

8- Puller roll

9- Winder

## DETAILED DESCRIPTION OF THE INVENTION

In order to convey advantageous intrinsic properties of polyamide46 to the drawn yarn, measures are taken in the yarn production steps. The polyamide46 pellets (raw material) are properly dried prior to melt processing. The melt phase residence time has been kept as low as possible. Finally, the yarn spinning conditions have been optimized.
Commercial polyamide46 pellets having a relative viscosity of at least 105 (unitless, according to ASTM D 789) and initial moisture content of at most 1000 ppm (ASTM D 6869) are fed continuously into a solid state polymerization (SSP) reactor silo. The function of the SSP reactor in present invention is solely the removal of moisture from polyamide46 pellets by recirculation of nitrogen gas through pellets. Nitrogen gas having a temperature in the range of 160 - 180 °C passes through the reactor filled with polyamide46 pellets with a flow rate in the range of 300 - 500 $m^3$/hr. Inside the SSP reactor, the relative viscosity of polyamide46 pellets do not change. Whereas, the moisture content of the pellets is decreased under 90 ppm (ASTM D 6869).
The polyamide46 pellets leaving the SSP reactor are inlet to a single screw extruder where polyamide46 is melt processed. Since the presence of moisture causes relative viscosity of polyamide46 to decrease during melt processing, moisture content of polyamide46 pellets at the exit of the SSP reactor should be as low as possible in order to attain the highest relative viscosity, which is essential to attain necessary mechanical properties in the filament yarn (relative viscosity is a measure of average molecular weight of polymer chains). In this process, explained drying process provides the lowest moisture content possible while avoiding any decrease in the relative viscosity of PA46 pellets.
The relative viscosity of PA46, which has a melting point around 290 °C, decreases as a function of melt phase temperature and residence time (higher melt phase temperature and residence time cause higher decrease in relative viscosity). Accordingly, extruder zone temperatures are kept at optimized values that are sufficient to run the melt process while limiting the relative viscosity decrease as much as possible. Namely, extruder zone temperatures in the present method are controlled at interval of 280 - 305 °C. Polyamide46 melt exiting the single screw extruder is maintained in the range of 305 - 315 °C.

Polyamide46 melt exiting the extruder is conveyed through a transfer line to the inlet of spinning gear pumps. Function of spinning pumps is to extrude the polymer through spinnerets with a constant flow rate in order to obtain filaments of precisely controlled thickness, namely, 6 dpf (denier per filament).

In present method of the invention, three adjacent spinning pumps provide a total melt flow rate of 112 kg/hr. Since the total volume of the extruder barrel and the transfer line is 6222 cm$^3$, total melt phase residence time of the polyamide46 in this process is approximately lower than 5 minutes (specific density of polyamide46 in melt phase is assumed as 1,2 g/cm$^3$).

The polyamide46 melt exiting the spinnerets in the form of filaments are quenched with air having a temperature between 12 - 18 °C and a relative humidity between 60 - 70%. The quench air having the specified conditions is blowed on filaments with a flow rate between 2000 - 2500 m$^3$/hour.

In the present invention, the relative viscosity (ASTM D 789) of polyamide46 filaments exiting the quench chamber is between 75 and 80. After the quenching process, the filaments are gathered and passed through spin finish oil applying tips so that undrawn multifilament yarns are formed. Spin finish oil is applied on running yarns so that that the produced yarn contains 1.0% to 1.2% spin finish oil by weight, preferably 1.1%. The spin finish oil used in present invention is a mixture of lubricant, emulsifier and antioxidant.

The spin finish oil applied yarn is drawn consequently via six pairs of spininning rolls and wound on paper tubes via take up winder to finally obtain the polyamide46 multifilament yarn having the specifications tabulated in Table 1. The first pair of rolls (pair1) captures the spin finish oil applied undrawn yarn ends. The second pair of rolls (pair2) has slightly higher rotational speed than the first pair. The third pair of rolls (pair3) has significantly higher rotational speed with respect to first two pairs and provides the first stage drawing of the yarn. The fourth pair of rolls (pair4) has the highest rotational speed among all roll pairs and provides the total drawing of the yarn which is also known as "machine draw ratio". The fifth (pair5) and sixth (pair6) pairs have slightly slower rotational speeds than the fourth pair so that a relaxation is induced to the yarn before the take-up. After the drawing process, the yarn is wound with a take up speed of at least 3000 m/min, which is necessary to carry out the yarn production with an adequate conversion cost.

The first stage draw ratio of the yarn (speed ratio:pair3/pair1) in explained process is higher than 3.3. Whereas the machine draw ratio (speed ratio: pair4/pair1) is higher than 5. The drawn yarn is relaxed by at least 4 percent in pair 5 (speed ratio: pair5/pair4 is lower than 0.96) and at least by 4.2 percent in pair 6 (speed ratio: pair6/pair4 is lower than 0.958)

The properties of a 1260 denier polyamide46 yarn produced according to present invention are given in Table 1 though the proposed method is applicable for production of polyamide46 yarns having a denier between 315 and 2520.

Polyamide yarns intended for tire reinforcement application should have a safe amount of toughness in order for tire cord fabric to tolerate impacts on roads. Accordingly, the tenacity of the polyamide46 yarn in the present invention is higher than 8.5 gram/denier, preferably 8.9 gram/denier. Whereas, the elongation at break value is between 15 and 20%, preferably 16.7%.

The shrinkage of the polyamide46 multifilament yarn produced according to the present invention is at least 6% (preferably 6.5%) where free shrinkage is characterized by the formula: $(l_o-l_1)/l_o$ x 100, $l_o$ being the length of yarn sample that is conditioned under 20 °C and 65% relative humidity for 4 hours under a tension of 0.05 gram/denier and $l_1$ is the length of the same sample under the same tension after being heated in an oven at 180±2 °C for 30 minutes in unstretched state followed by conditioning at 20 °C and 65% relative humidity for 4 hours. With such shrinkage property, the shrink force of the yarn is at least 0.35, preferably 0.37 gram/denier.

Table 1. Physical properties of the produced 1260 denier polyamide46 yarn according to proposed method.

| Physical Property | Units | Method | Value |
|---|---|---|---|
| Linear Density | denier | ASTM D 1907 | 1260 |
| Elongation at break | % | ASTM D 885 | 16.7 |
| Elongation at 44.5N | % | ASTM D 885 | 6.85 |
| Tenacity | gram/denier | ASTM D 885 | 8.9 |
| Free shrinkage | % | Described in page 2, lines 23-28 | 6.5 |
| Shrink force | gram/denier | ASTM D 5591 | 0.37 |
| Finish on yarn | % | ASTM D 2257 | 1.1 |

**Claims**

1. A polyamide46 multifilament yarn is **characterized by** having a free shrinkage value which is determined by the formula;

$$(I_o-I_1)/I_o \text{ x } 100$$

where $I_o$ is the length of yarn sample that is conditioned under 20 °C and 65% relative humidity for 4 hours under a tension of 0.05 gram/denier and $I_1$ is the length of the same sample under the same tension after being heated in an oven at 180±2 °C for 30 minutes in unstretched state followed by conditioning at 20 °C and 65% relative humidity for 4 hours, in between 6-8%, a shrink force value according to ASTM D 5591 which is higher than 0.35 gram/denier and an elongation at break value according to ASTM D 885 in between 15% and 20%.

2. A polyamide46 multifilament yarn for tire applications according to claim 1, has a tenacity higher than 8.5 gram/denier.

3. A polyamide46 multifilament yarn for tire applications according to claim 1, has a linear density between 315 and 2520 denier.

4. A method for producing polyamide46 multifilament yarn for tire applications comprising the following sequential steps:

   - removing the initial moisture content of polyamide46 pellets by drying,
   - melt processing of polyamide46 pellets via single screw extruder in a manner that temperature of the melt at the exit of extruder is at a temperature between 280-305 °C,
   - conveying of polyamide46 melt which exits the extruder, through a transfer line to the spinnerets with a total melt phase residence time of at most 5 minutes,
   - obtaining said polyamide46 filaments by extruding said polyamide46 melt through spinnerets,
   - quenching said polyamide46 filaments with air at quenching chamber (1) - drawing and relaxing said polyamide46 yarn by six sequential pairs of spinning rolls by means of wrapping the yarn on the rolls, wherein each pairs of said spinning rolls have different speeds,
   - drawing the yarns in the first four pairs of spining rolls,
   - relaxing the yarns in the last two pairs of spinning rolls,
   - winding said drawn polyamide46 yarns at take-up winder (9) with a winding speed of at least 3000 m/min.

5. A method of producing polyamide46 yarns for tire applications according to claim 4, wherein the speed ratio of third spinning roll pair (4) to first spinning roll pair (2) is higher than 3.3.

6. A method of producing polyamide46 yarns for tire applications according to claim 4, wherein the speed ratio of fourth spinning roll pair (5) to first spining roll pair (2) is higher than 5.

7. A method of producing polyamide46 yarns for tire applications according to claim 4 , wherein speed of the fifth spinning roll pair (6) is at least 4% lower than the speed of fourth spining roll pair (5).

8. A method of producing polyamide46 yarns for tire applications according to claim 4, wherein speed of the sixth spinning roll pair (7) is at least 4.20% lower than the speed of fourth spining roll pair (5).

9. A polyamide46 multifilament yarn for tire cap ply applications is produced by the process of claim 4 to 8 and has a free shrinkage value which is determined by the formula;

$$(I_o-I_1)/I_o \text{ x } 100$$

where $I_o$ is the length of yarn sample that is conditioned under 20 °C and 65% relative humidity for 4 hours under a tension of 0.05 gram/denier and $I_1$ is the length of the same sample under the same tension after being heated in an oven at 180±2 °C for 30 minutes in unstretched state followed by conditioning at 20 °C and 65% relative humidity for 4 hours, in between 6-8%, a shrink force value (according to ASTM D 55919 which is higher than 0.35 gram/denier and an elongation at break value (according to ASTM D 885) in between 15% and 20%.

**Patentansprüche**

1. Polyamid46-Multifilamentgarn ist **gekennzeichnet durch** einen freien Schrumpfwert, der durch die Formel bestimmt wird;

$$(I_o-I_1)I_o \quad x \quad 100$$

wo $I_o$ ist die Länge der Garnprobe, die unter 20°C und 65% relativer Feuchtigkeit für 4 Stunden unter einer Spannung von 0.05 Gramm/Denier konditioniert wird und $I_1$ ist die Länge der gleichen Probe unter der gleichen Spannung, nach Erhitzen in einem Ofen bei 180±2°C für 30 Minuten in ungedehntem Zustand mit anschließender Konditionierung bei 20°C und 65% relativer Feuchtigkeit für 4 Stunden, zwischen 6-8%, einen Schrumpfkraftwert nach ASTM D 5591, der höher als 0.35 Gramm/Denier ist, und einen Reißdehnungswert nach ASTM D 885 zwischen 15% und 20%.

2. Polyamid46-Multifilamentgarn für Reifenanwendungen nach Anspruch 1, hat eine Zähigkeit von mehr als 8.5 Gramm/Denier.

3. Polyamid46-Multifilamentgarn für Reifenanwendungen nach Anspruch 1, hat eine lineare Dichte zwischen 315 und 2520 Denier.

4. Verfahren zur Herstellung von Polyamid46-Multifilamentgarn für Reifenanwendungen, umfassend die folgenden sequenziellen Schritte:

    - Entfernen des anfänglichen Wassergehaltes von Polyamid46-Pellets durch Trocknen,
    - Schmelzverarbeitung von Polyamid46-Pellets mittels Einschneckenextruder, damit die Temperatur der Schmelze am Ausgang des Extruders bei einer Temperatur zwischen 280-305°C liegt,
    - Förderung von Polyamid46-Schmelze, die aus dem Extruder austritt, durch eine Transferleitung zu den Spinndüsen mit einer Gesamtverweilzeit der Schmelzphase von höchstens 5 Minuten,
    - Erhalten der Polyamid46-Filamente durch Extrudieren der genannten Polyamid46-Schmelze durch Spinndüsen,
    - Abschrecken der genannten Polyamid46-Filamente mit Luft in der Abschreckkammer (1) - Ziehen und Entspannen des genannten Polyamid46-Garns durch sechs sequenzielle Paare von Spinnwalzen mittels Aufwickeln des Garns auf die Walzen, wobei jedes Paar der genannten Spinnwalzen unterschiedliche Geschwindigkeiten aufweist,
    - Ziehen der Garne in den ersten vier Paaren von Spinnwalzen,
    - Entspannen der Garne in den letzten beiden Paaren von Spinnwalzen,
    - Wickeln der genannten verstreckten Polyamid46-Garne an der Aufwickelmaschine (9) mit einer Wickelgeschwindigkeit von mindestens 3000 m/min.

5. Verfahren zur Herstellung von Polyamid46-Garnen für Reifenanwendungen nach Anspruch 4, wobei das Geschwindigkeitsverhältnis vom dritten Paar von Spinnwalzen (4) zu erstem Paar von Spinnwalzen (2) höher als 3.3 ist.

6. Verfahren zur Herstellung von Polyamid46-Garnen für Reifenanwendungen nach Anspruch 4, wobei das Geschwindigkeitsverhältnis vom vierten Paar von Spinnwalzen (5) zum ersten Paar von Spinnwalzen (2) höher als 5 ist.

7. Verfahren zur Herstellung von Polyamid46-Garnen für Reifenanwendungen nach Anspruch 4, wobei die Geschwindigkeit vom fünften Paar von Spinnwalzen (6) mindestens 4% niedriger ist als die Geschwindigkeit vom vierten Paar von Spinnwalzen (5).

8. Verfahren zur Herstellung von Polyamid46-Garnen für Reifenanwendungen nach Anspruch 4, wobei die Geschwindigkeit vom sechsten Paar von Spinnwalzen (7) mindestens 4.20% niedriger ist als die Geschwindigkeit vom vierten Paar von Spinnwalzen (5).

9. Polyamid46-Multifilamentgarn für Reifenkappenlagen-Anwendungen wird durch den Prozess nach Ansprüche 4 bis 8 hergestellt und hat einen freien Schrumpfwert, der durch die folgende Formel bestimmt wird;

$$(I_o-I_1)/I_o \ \text{x} \ 100$$

wo $I_o$ die Länge der Garnprobe ist, die unter 20°C und 65% relativer Feuchtigkeit für 4 Stunden unter einer Spannung von 0.05 Gramm/Denier konditioniert wird and $I_1$ ist die Länge der gleichen Probe unter der gleichen Spannung, nach Erhitzen in einem Ofen bei 180±2°C für 30 Minuten in ungedehntem Zustand mit anschließender Konditionierung bei 20°C und 65% relativer Feuchtigkeit für 4 Stunden, zwischen 6-8%, einen Schrumpfkraftwert (nach ASTM D 55919 der höher als 0.35 Gramm/Denier ist, und einen Reißdehnungswert (nach ASTM D 885) zwischen 15% und 20%.

**Revendications**

1. Fil multi filament en polyamide46 est **caractérisé par le fait qu'**il présente une valeur de rétrécissement libre qui est déterminée par la formule ;

$$(I_o-I_1)I_o \ \text{x} \ 100$$

où $I_o$ est la longueur de l'échantillon de fil qui est conditionné sous 20 °C et 65% humidité relative pendant 4 heures sous une tension de 0.05 gramme/denier et $I_1$ est la longueur de la même échantillon sous la même tension après avoir été chauffé dans un four à 180±2 °C pendant 30 minutes à l'état non étiré, suivi d'un conditionnement à 20 °C et 65% d'humidité relative pendant 4 heures, entre 6-8%, une valeur de force de retrait selon la norme ASTM D 5591 supérieure à 0.35 gramme/denier et une valeur d'allongement à la rupture selon la norme ASTM D 885 entre 15% et 20%.

2. Fil multi filament en polyamide46 pour les applications de pneus selon la revendication 1, a une ténacité supérieure à 8.5 grammes/denier.

3. Fil multi filament en polyamide46 pour les applications de pneus selon la revendication 1, a une densité linéaire comprise entre 315 et 2520 deniers.

4. Procédé de production d'un fil multi filament en polyamide46 pour des applications de pneus comprenant les étapes séquentielles suivantes :

   - éliminer la teneur initiale en humidité des pellets de polyamide46 par séchage,
   - traiter par fusion des pellets de polyamide46 via une extrudeuse à vis unique de telle sorte que la température de la masse fondue à la sortie de l'extrudeuse soit comprise entre 280-305 °C,
   - transporter la masse fondue de polyamide46 qui sort de l'extrudeuse, à travers une ligne de transfert vers les filières avec un temps de séjour de la phase de la masse fondue totale 5 minutes au maximum,
   - obtenir lesdits filaments de polyamide46 en extrudant ledit polyamide46 à l'état fondu à travers des filières,
   - tremper lesdits filaments de polyamide46 avec de l'air dans la chambre de trempe (1) - étirer et détendre ledit fil de polyamide46 par six paires séquentielles de rouleaux de filage au moyen de l'enroulement du fil sur les rouleaux, dans lequel chaque paire desdits rouleaux de filage a des vitesses différentes,
   - tirer les fils dans les quatre premières paires de rouleaux de filage,
   - détendre les fils dans les deux dernières paires de rouleaux de filage,
   - enrouler lesdits fils de polyamide46 étirés à l'enrouleur de réception (9) avec une vitesse d'enroulement d'au moins 3000 m/min.

5. Procédé de production de fils de polyamide46 pour des applications de pneus selon la revendication 4, dans lequel le rapport de vitesse de la troisième paire de rouleaux de filage (4) à la première paire de rouleaux de filage (2) est supérieur à 3.3.

6. Procédé de production de fils de polyamide46 pour des applications de pneus selon la revendication 4, dans lequel le rapport de vitesse de la quatrième paire de rouleaux de filage (5) à la première paire de rouleaux de filage (2) est supérieur à 5.

7. Procédé de production de fils de polyamide46 pour des applications de pneus selon la revendication 4, dans lequel la vitesse de la cinquième paire de rouleaux de filage (6) est inférieure d'au moins 4% à la vitesse de la quatrième paire de rouleaux de filage (5).

8. Procédé de production de fils de polyamide46 pour des applications de pneus selon la revendication 4, dans lequel la vitesse de la sixième paire de rouleaux de filage (7) est inférieure d'au moins 4.20% à la vitesse de la quatrième paire de rouleaux de filage (5).

9. Fil multi filament de polyamide46 pour des applications de nappe sommet pour pneus est produit par le procédé de la revendication 4 à 8 et a une valeur de rétrécissement libre qui est déterminée par la formule ;

$$(I_o-I_1)I_o \; x \; 100$$

où $I_o$ est la longueur de l'échantillon de fil qui est conditionné sous 20 °C et 65% humidité relative pendant 4 heures sous une tension de 0.05 gramme/denier et $I_1$ est la longueur de la même échantillon sous la même tension après avoir été chauffé dans un four à 180±2 °C pendant 30 minutes à l'état non étiré, suivi d'un conditionnement à 20 °C et 65% d'humidité relative pendant 4 heures, entre 6-8%, une valeur de force de retrait (selon la norme ASTM D 55919 supérieure à 0.35 gramme/denier et une valeur d'allongement à la rupture (selon la norme ASTM D 885) entre 15% et 20%.

**FIGURE 1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0381281 A3
- KR 900007087 B1

- WO 02095096 A1